# EUROPEAN PATENT APPLICATION

(11) **EP 3 410 407 A1**
(43) Date of publication of application: **05.12.2018**
(21) Application number: 18174789.0
(22) Date of filing: 29.05.2018
(51) Int. Cl.: G07C 5/08, G06Q 10/00, B64F 5/60

(54) **RFID BASED PROGNOSTIC AND DIAGNOSTIC DATA COMMUNICATION**

(30) Priority: 29.05.2017 IN 201711018751
(71) Applicant: Goodrich Corporation, Charlotte, NC 28217-4578 (US)
(72) Inventor: Balasubramanian, Rameshkumar, Karnataka, Bangalore 560016 (IN); Khanra, Sujoy, Karnataka, Bangalore 560003 (IN)
(74) Representative: Dehns

(57) **Abstract**

Disclosed is a method of radio frequency identification communication (RFID) between an avionics system and an RFID reader (102). The method includes connecting to a wireless RFID tag in the avionics system with the RFID reader (102) while proximate to but not touching the RFID tag. The RFID reader (102) receives, via wireless communication from the RFID tag, system data at the RFID reader comprising one or more of prognostic data and diagnostic health data associated with the avionics system. The RFID reader (102) then displays, on a graphic user interface (110), the system data such that the system data is user-selectable for identification of one or more avionics system errors. The RFID reader synchronizes, via a communications interface (108) on the RFID reader, the system data with a maintenance server.

## Description

### FOREIGN PRIORITY

This application claims priority to India Patent Application No. 201711018751, filed May 29, 2017.

### BACKGROUND

Exemplary embodiments pertain to the art of radio frequency identification devices (RFIDs), and more particularly to RFID-based prognostic and diagnostic data communication for avionics systems.

Avionics systems implement health monitoring mechanisms to monitor, diagnose and report data to the maintenance technician for taking necessary action. These systems use wired and/or wireless communication interfaces to connect to the maintenance servers. Current health monitoring mechanisms and systems require high power to transmit large amount of data to the servers through these communication interfaces.

The communication interfaces used by the avionics systems can expose security threats and vulnerabilities. Additionally, aircraft travel to multiple airports across various countries, and thus, qualifying the communication mechanism through various regulatory authorities is difficult.

Some avionics systems implement health monitoring mechanisms, however when the aircraft are on the ground or at hanger or at the gate, the above noted mechanisms of communication can experience power loss, leaving them with no connectivity to the avionics data bus. The loss of power forces physical intrusion to the system to collect health and maintenance data. For example: after the aircraft arrives on ground, the maintenance technician physically collects the health and maintenance data by plugging a memory device to the maintenance or access port of the avionics systems on the aircraft and transfers the data to a maintenance server via USB stick or any other memory device.

### BRIEF DESCRIPTION

Disclosed is a method of radio frequency identification communication (RFID) between an avionics system and an RFID reader. The method includes connecting to a wireless RFID tag in the avionics system with the RFID reader while proximate to but not touching the RFID tag. The RFID reader receives, via wireless communication from the RFID tag, system data at the RFID reader comprising one or more of prognostic data and diagnostic health data associated with the avionics system. The RFID reader then displays, on a graphic user interface, the system data such that the system data is user-selectable for identification of one or more avionics system errors. The RFID reader synchronizes, via a communications interface on the RFID reader, the system data with a maintenance server.

Also disclosed is a system for radio frequency identification (RFID) data communication between an avionics system and a RFID reader. The RFID reader has a processor configured to connect to a wireless RFID tag in the avionics system with the RFID reader while proximate to but not touching the RFID tag. The RFID reader receives system data via wireless communication from the RFID tag. The system data includes one or more of prognostic data and diagnostic health data associated with the avionics system of an aircraft. The RFID reader displays, on a graphic user interface, the system data such that the system data is user-selectable for identification of one or more avionics system errors. The RFID reader synchronizes, via a communications interface on the RFID reader, the system data with a maintenance server.

A system for monitoring avionics system prognostic and diagnostic data on a plurality of aircraft via radio frequency identification (RFID) data communication includes a server operatively connected to a plurality of RFID readers. The server is configured to receive avionics system data from a RFID reader of the plurality of RFID readers. The system data includes prognostic and diagnostic data indicative of operational aspects of the avionics system. The avionics system is associated with a particular aircraft of the plurality of aircraft. The server is configured to synchronize the system data with associated system data stored in an operably connected database, and transmit the synchronized system data to the RFID reader.

### BRIEF DESCRIPTION OF THE DRAWINGS

The following descriptions should not be considered limiting in any way. With reference to the accompanying drawings, like elements are numbered alike:
FIG. 1 depicts a RFID based prognostic and diagnostic data communication system for an aircraft, according to one embodiment;
FIG. 2 illustrates an avionics system/sensor configured for interfacing with an RFID reader according to one embodiment;
FIG. 3 illustrates a structure for organization of health, maintenance and configuration data in the tag-memory according to one embodiment;
FIGS. 4a-4f depict various screens of an exemplary graphic user interface of the RFID reader of FIG. 1 according to one embodiment; and
FIG. 5 depicts an operating environment for the system of FIG. 1 according to one embodiment.

### DETAILED DESCRIPTION

A detailed description of one or more embodiments of the disclosed apparatus and method are presented herein by way of exemplification and not limitation with reference to the Figures.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Aircraft maintenance includes collecting health and operational information from various aircraft systems, subsystems, and/or sensors. Collecting health and maintenance data associated with systems and/or sensors currently requires physical access ports in the avionics systems. These ports may be compromised by environmental conditions and other operational factors. Aircraft security may also be compromised at the physical port access points. Collecting prognostic and diagnostic data from multiple sensors, ports, and controllers can also be time consuming, and the collected health data can be analyzed only in the office environment.

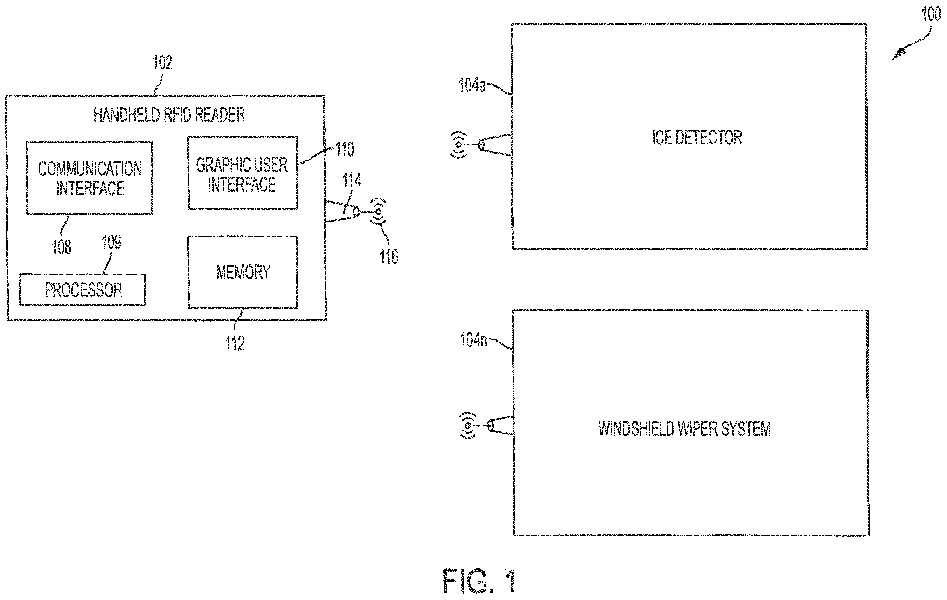

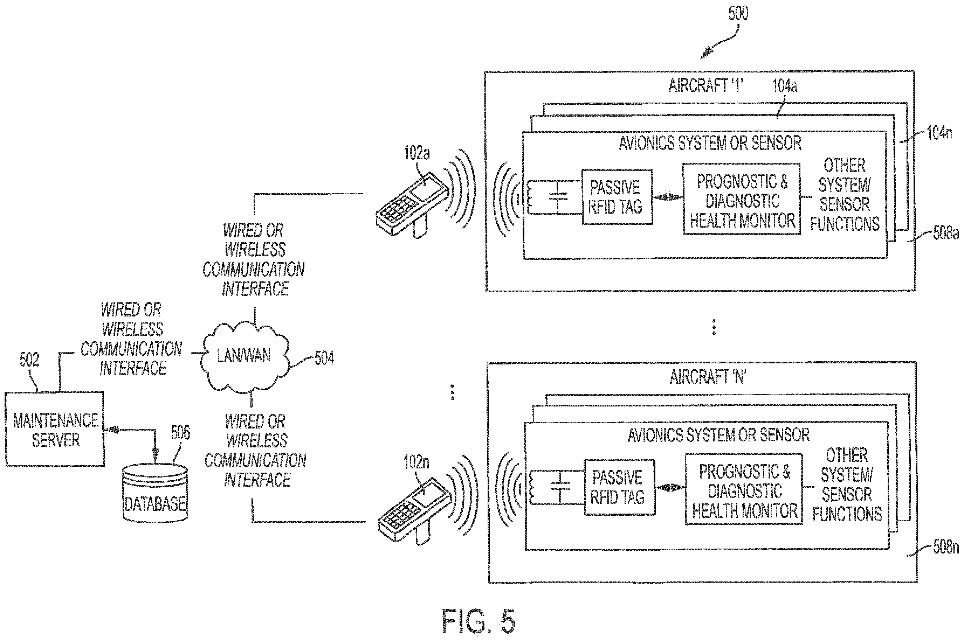

FIG. 1 will be described in conjunction with FIG. 5 depicting an operating environment 500 for system 100. FIG. 1 depicts a system 100 for RFID based prognostic and diagnostic data communication for an aircraft, according to one embodiment. The architecture shown in FIG. 1 illustrates one aspect of an interconnection of a RFID reader 102 (hereafter "RFID reader 102") and a passive RFID tag 202 (hereafter "tag 202"). RFID reader 102 connects with the existing avionics systems and/or sensors of an aircraft (such as, for example, an ice detector 104a and a windshield wiper system 104n via wireless RFID communication. RFID reader 102 is configured to be portable or mobile such that a user may carry the reader in a single hand. Further, in one embodiment, the RFID reader can write configuration data (e.g., installation date, aircraft tail no., manufacturer, etc.) into the tag memory of the RFID tag.

Referring briefly to FIG. 5, an operating environment 500 for system 100 is shown, according to embodiments. In one aspect, one or more RFID readers 102a ... 102n (where reference to RFID reader 102 may be any one of RFID readers 102a...102n) interface with one or more of avionics systems and/or sensors 104a ... 104n of aircrafts 508a to 508n RFID reader 102 is configured to retrieve prognostic and diagnostic health data from one or more avionics systems/sensors 104a .. 104n using RFID via one or more passive RFID tags integrated into the systems or sensors. In some aspects described hereafter, RFID reader 102 receives and stores health and maintenance data indicative of the health or operation of the avionics system in non-volatile memory on the reader, and synchronizes the health and maintenance data retrieved from multiple avionics systems on one or more aircrafts (e.g., aircrafts 508a ... 508n) with a maintenance server 502 via a communication network 504. Maintenance server 502 stores the health and maintenance data in one or more databases 506 and can be implemented as a single server or one or more servers.

According to one embodiment, RFID reader 102 may connect with multiple avionics systems 104a...104n (collectively systems 104) simultaneously or independently. Systems 104 are considered to be on a single aircraft. In some aspects, RFID reader 102 may connect to multiple avionics of each aircraft, and may also connect to multiple aircraft when proximate to RFID tags on the aircraft. Proximate to may be, for example, within 1-40 feet of any particular RFID tag. In other aspects, the distance may be extended with higher powered transmitters (and batteries) on the RFID reader 102.

The health and maintenance data is collected from the avionics systems/sensors of aircrafts 508a ... 508n. Any actions taken by a user of the RFID reader 102 (responsive to data that indicates a maintenance problem) are archived by RFID reader 102 in maintenance database 506 and/or server 502 for audit purposes and for future analysis. In one embodiment, the RFID reader 102 enables the user to take immediate actions by looking into the health data.

RFID reader 102 automatically establishes a secured connection via communication network 504 with the maintenance server 502. In some aspects, the connection to maintenance server 502 is manually established by the technician. The secured connection to the maintenance server is established through the wired and/or wireless communication interface available in the RFID reader.

Data stored in multiple RFID readers (e.g., 102a...102n) are synchronized to the maintenance server via the secured and dedicated LAN/WAN network. The data are encrypted using an encryption algorithm before synchronizing to the maintenance server to avoid any security related issues/vulnerabilities. In one embodiment, the diagnostics health data are synchronized to server 502 for taking immediate correction actions and/or for recording the actions already taken. Similarly, the prognostic health data may be synchronized to airlines or OEM's maintenance servers for planning preventative maintenance.

Referring again to FIG. 1, RFID reader 102 includes an antenna 114 operatively connectable to one or more avionics systems and/or sensors (104a ... 104n), a communication interface 108 connected to a processor 109 for interacting with information received from avionics systems and/or sensors 104a ... 104n), a graphic user interface 110, and a memory 112. In one embodiment, RFID reader 102 is configured to broadcast or produce electromagnetic (RF) energy 116 via antenna 114 to the RFID tag in any of the avionics systems or sensors (e.g., ice detector 104). Graphical user interface 110 is configured to receive a user selection indicative of an avionics system and/or sensor to retrieve the health and maintenance data, to view any anomalies, to receive user input indicative of one or more actions, and to receive one or more instructions to record the action taken.

Reader memory 112 is a non-volatile internal memory configured to store the retrieved prognostic and diagnostic health data from avionics systems and/or sensors 104a ... 104n, The capacity of reader-memory 112 is configured to hold large portions (e.g., gigabytes) of data. The stored data may be, for example, 10 GB, 20 GB, etc. Memory 112 stores health and maintenance data from multiple avionics systems/sensors (e.g., 104a ... 104n) and from multiple aircrafts (e.g., aircrafts 508a ...508n as described hereafter with respect to FIG. 5).

Communication interface 108 is a wired and/or wireless communication interface configured for synchronizing the retrieved health and maintenance data to a maintenance server (e.g., maintenance server 502 as shown in FIG. 5).

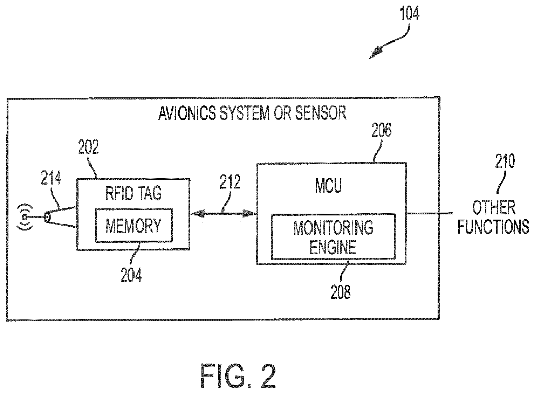

FIG. 2 illustrates an avionics system/sensor 104 (hereafter system 104) configured for interfacing with RFID reader 102, according to one embodiment. During the normal operation of the aircraft, for example when the aircraft power is available to micro-controller unit (MCU) 206, MCU 206 performs the Prognostic and Diagnostic Health Monitor (PDHM) operations and stores the health and maintenance data on the RFID tag-memory 204 of the RFID tag 202. Storing the PDHM data directly on RFID tag memory 204 of the RFID tag 202 eliminates the addition of external memory chips to store the health and maintenance data for PDHM operations. MCU 206 and tag-memory 204 are connected via a communication interface bus 212.

System 104 includes a passive Ultra High Frequency (UHF) RFID tag 202, an antenna 214 configured to receive RF energy 116 from RFID reader 102 and to transmit health and maintenance data to the RFID reader. System 104 includes non-volatile memory (e.g., tag-memory 204) configured to store tag information, configuration information, health data, maintenance data etc. System 104 includes a communication interface bus 212 for data connectivity between RFID tag 202 and the MCU 206. System 104 is operatively connected to receive, control, monitor, etc. one or more other functions 210 of the aircraft.

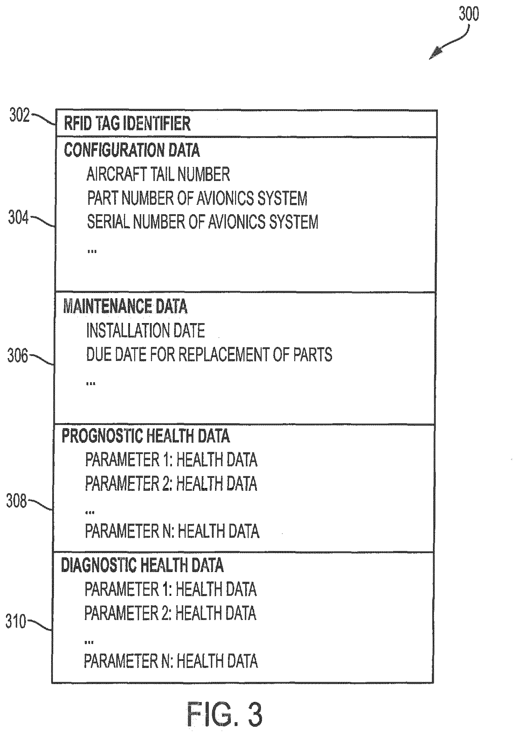

FIG. 3 illustrates a structure 300 for organization of health and maintenance data in the tag-memory 204, according to one embodiment. A standardized message format may be used for health and maintenance data, which enables easy integration of the passive RFID tag 202 with MCU 206. Structure 300 may be used to store health and maintenance data in the tag-memory 204. Structure 300 can include (but is not limited to) a RFID tag identifier (ID) 302, System/Sensor configuration data 304, maintenance data 306, Prognostic health data 308, and diagnostic health data 310. The data of structure 300 are stored in tag-memory 204. Prognostic health data 308 and diagnostic health data 310 include various hardware health parameters (1, 2, ... n) value with control limits and error information. An example of a hardware health parameter may be, for example, hardware life, voltage, current, wear, etc.

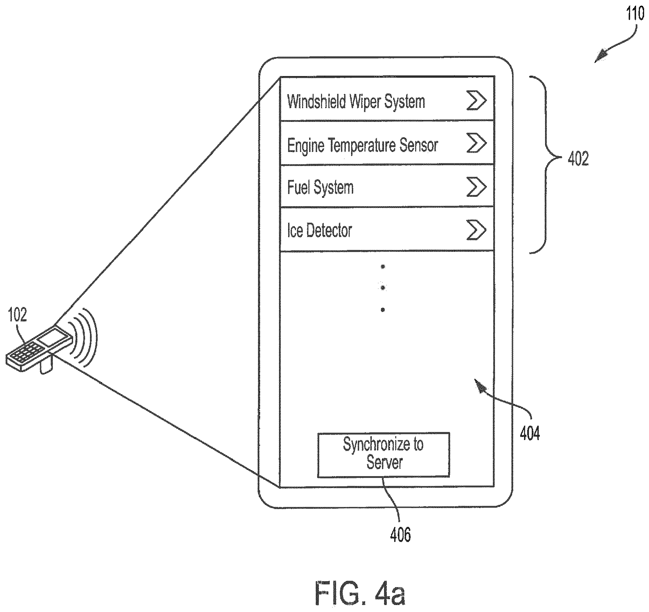

FIGS. 4a-4f depict various screens of exemplary graphic user interface (GUI) 110 of RFID reader 102, according to one embodiment. As shown in FIG. 4a, GUI 110 includes a plurality of systems 402 of an aircraft. Systems 402 are discovered by reading RFID tags in each of the systems with RFID reader 102. Additional systems 404 may populate GUI 110 as those systems become readable by RFID reader 102. GUI 110 may also include a user-selectable synchronize to server input 406. Accordingly, a user may select input element 406 and cause RFID reader 102 to synchronize the stored data with one or more servers 502.

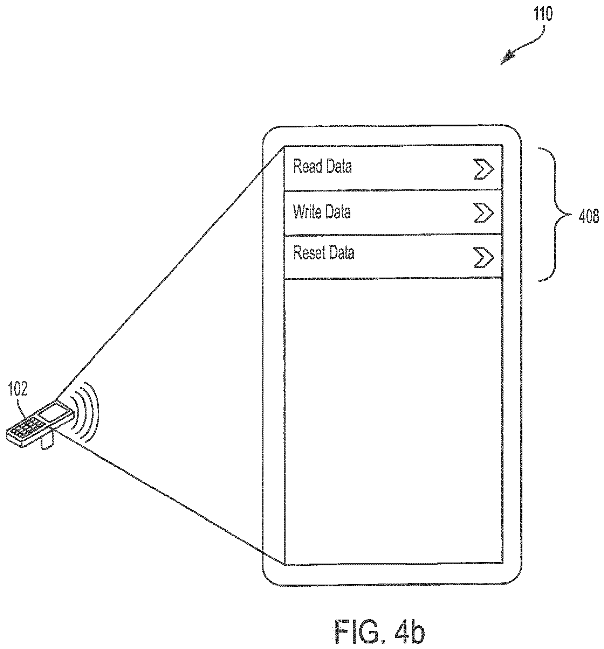

FIG. 4b shows GUI 110 having user-selectable inputs for reading data from avionics systems/sensors 104. Inputs 408 are configured for manually reading data, writing data, and resetting data stored on memory 204.

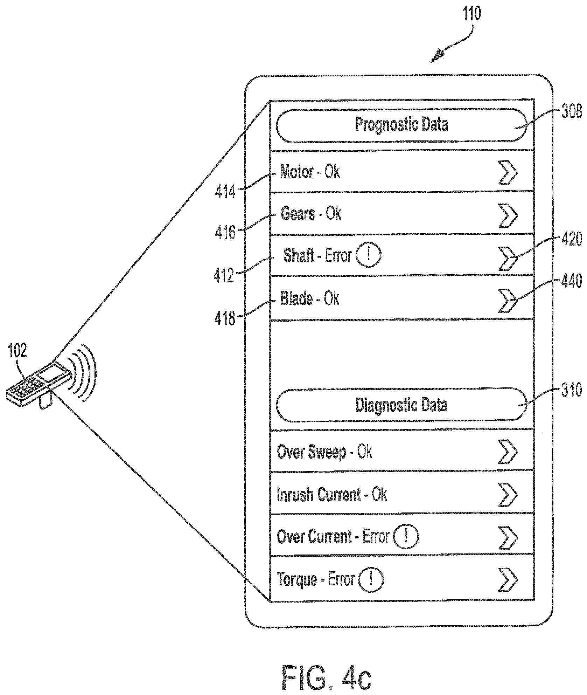

FIG. 4c depicts examples of prognostic health data 308 and diagnostic health data 310. According to one embodiment, RFID reader 102 displays information respective to each of the scanned read systems 402. Prognostic data may show one or more errors (e.g., shaft error 412), and may show one or more functionality confirmations (e.g., motor OK 414, gears OK 416, and blade OK 418, etc.). Details of an error (e.g. Shaft error 412) and/or confirmations (e.g. Blade OK 418) are output by processor 109 after receiving user input as a selected element (e.g. 420 or 440).

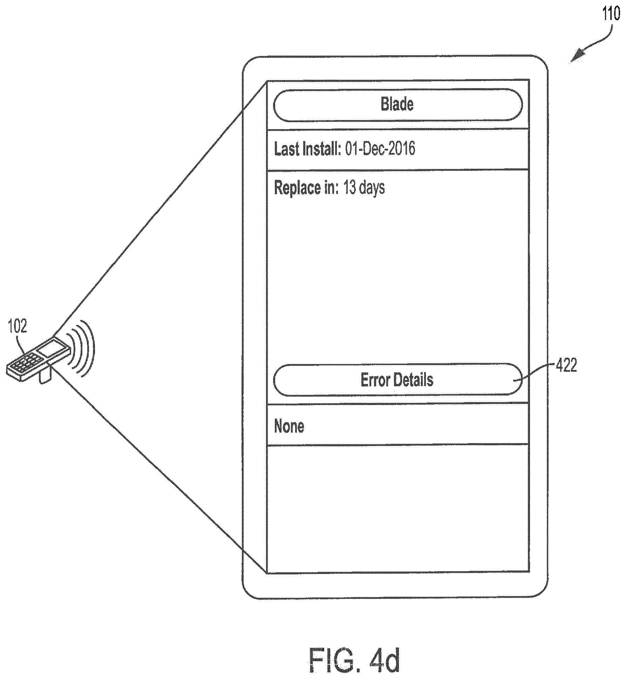

FIG. 4d depicts GUI 110 having details for one of the error and/or confirmations of FIG. 4c. After receiving a user-selected input (selected element 420, 440, e.g.,) to investigate an error and/ or confirmations as shown in FIG. 4c, RFID reader 102 is configured to provide details as shown in FIG. 4d. Maintenance data 306 may be output by RFID reader 102 including any details regarding the error and/ or confirmations.

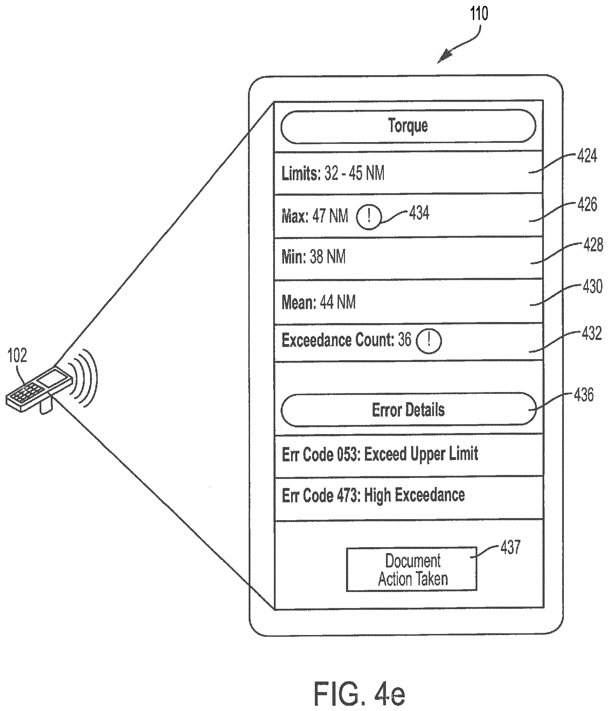

FIG. 4e shows an example of configuration data or operation data on GUI 110. In some aspects, a particular element of an avionics system/sensor (e.g., windshield wiper system 104n) may include various operational limits 424 and max and min recorded values 426, 428. Based on recorded values, a mean 430 and number of times the measures values (e.g., of torque) exceed the upper or lower limits as indicated by exceedance count 432. In one embodiment, any readings out of a predetermined acceptable range (e.g., 428 and 432) may be identified by processor 109 with a user-readable warning or alert 434. Error details 436 may be displayed by processor 109 having various details regarding the alert at issue. Selection element 437 may receive user input directing processor 109 to document any actions taken respective to the warning or alert 434.

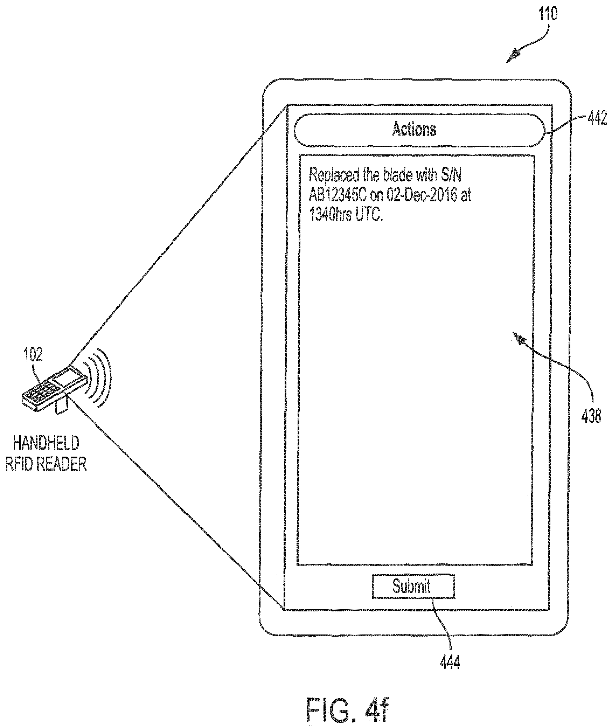

FIG. 4f depicts details of various actions taken 442 in connection with warning or alert 434. Individual actions 438 may be manually input by the user in some aspects. A submit button 444 may be provide to store the data to a memory such as memory 112 of RFID reader 102.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A method of radio frequency identification (RFID) communication between an avionics system and an RFID reader (102) comprising:
connecting to a wireless RFID tag in the avionics system with the RFID reader (102) while proximate to but not touching the RFID tag;
receiving, via wireless communication from the RFID tag, system data at the RFID reader comprising one or more of prognostic data and diagnostic health data associated with the avionics system;
displaying, on a graphic user interface (110), the system data such that the system data is user-selectable for identification of one or more avionics system errors; and
synchronizing, via a communications interface (108) on the RFID reader, the system data with one or more maintenance servers;
writing, via wireless communication to the RFID tag, the configuration data.

2. The method of claim 1, wherein the RFID reader (102) is configured for connecting to a plurality of RFID tags in a plurality of avionics systems within a single aircraft and wherein the RFID tags can operate without power from the aircraft.

3. The method of claim 2, wherein the RFID reader (102) is configured for connecting to the plurality of RFID tags in the plurality of avionics systems simultaneously.

4. The method of any preceding claim, wherein the system data is identifiable by the RFID reader (102) as unique to a particular system or sensor in a particular aircraft.

5. The method of any preceding claim, wherein the RFID reader (102) is configured for:
receiving the system data at the RFID reader (102);
displaying the system data on the user interface (110);
receiving a user selection of a portion of the system data indicative of the one or more avionics system;
and outputting secondary information indicative of one or more aspects of the one or more avionics system responsive to the received user selection, wherein the secondary information includes one or more of configuration data, maintenance data, prognostic health data, and diagnostic health data.

6. The method of claim 5, wherein the RFID reader (102) is configured for receiving the user selection of the portion of the system data indicative of the one or more avionics system errors; and
receiving a user input indicative of one or more actions taken responsive to the one or more avionics system errors.

7. The method of any preceding claim, wherein prognostic data comprises an indication of operability of a respective avionics system hardware component, wherein the indication of operability indicates whether the respective avionics system hardware component is functioning normally or abnormally.

8. The method of any preceding claim, wherein the diagnostic data comprises an indication of a predetermined characteristic of a respective avionics system hardware component, the predetermined characteristic indicating when a hardware component of the avionics system is functioning normally or abnormally.

9. The method of any preceding claim, wherein the maintenance server is configured to receive system data from a plurality of RFID readers in associated with a plurality of aircraft.

10. A system for radio frequency identification (RFID) data communication between an avionics system and a RFID reader (102) comprising:
RFID reader (102) having a processor configured to:
connect to a wireless RFID tag in the avionics system with the RFID reader (102) while proximate to but not touching the RFID tag;
receive, via wireless communication from the RFID tag, system data at the RFID reader comprising one or more of prognostic data and diagnostic health data associated with the avionics system;
display, on a graphic user interface (110), the system data such that the system data is user-selectable for identification of one or more avionics system errors; and
synchronize, via a communications interface (108) on the RFID reader, the system data with one or more maintenance servers;
write, via wireless communication to the RFID tag, the configuration data.

11. The system of claim 10, wherein the RFID reader (102) is configured for connecting to a plurality of RFID tags in a plurality of avionics systems within a single aircraft and wherein the RFID tags can operate without power from the aircraft.

12. The system of claim 11, wherein the RFID reader (102) is configured for connecting to the plurality of RFID tags in the plurality of avionics systems simultaneously.

13. The system of any of claims 10-12, wherein the system data is identifiable by the RFID reader as unique to a particular system or sensor in a particular aircraft.

14. The system of any of claims 10-13, wherein the RFID reader (102) is configured for:
receiving the system data;
displaying the system data on the user interface;
receiving a user selection of a portion of the system data indicative of the one or more avionics system; and
outputting secondary information indicative of one or more aspects of the one or more avionics system responsive to the received user selection, wherein the secondary information includes one or more of configuration data, maintenance data, prognostic health data, and diagnostic health data.

15. The system of claim 14, wherein the RFID reader (102) is configured for receiving the user selection of the portion of the system data indicative of the one or more avionics system errors; and
receiving a user input indicative of one or more actions taken responsive to the one or more avionics system errors.
